# EUROPÄISCHE PATENTSCHRIFT

(11) **EP 1 923 665 B1**
(45) Veröffentlichungstag und Bekanntmachung des Hinweises auf die Patenterteilung: **09.09.2009**
(21) Anmeldenummer: 06023803.7
(22) Anmeldetag: 16.11.2006
(51) Int. Cl.: G01B 13/02, B23Q 17/22

(54) **Messvorrichtung zur pneumatischen Positionskontrolle von Gegenständen**
Measuring device for the pneumatic position control of parts
Dispositif pneumatique pour le control de la position des pièces

(43) Veröffentlichungstag der Anmeldung: 21.05.2008
(73) Patentinhaber: FESTO AG & Co. KG, 73734 Esslingen (DE)
(72) Erfinder: Briegel, Richard, 73770 Denkendorf (DE); Hörz, Jürgen, 72585 Riederich (DE)
(74) Vertreter: Abel, Martin

(56) Entgegenhaltungen:
- EP-A- 1 393 854
- DE-A1- 19 734 374
- DE-B3-102004 022 130
- SU-A1- 1 493 392
- "Betriebsanleitung - Pneumatische Positionsüberwachung MS01" 18. Dezember 2003 (2003-12-18), REXROTH BOSH GROUP , XP002427616 * das ganze Dokument *

## Beschreibung

Die Erfindung betrifft eine Messvorrichtung zur pneumatischen Positionskontrolle von Gegenständen, mit einem mit mindestens einer Messdüse verbundenen oder verbindbaren Versorgungskanal, in den ein während eines Messmodus einen Arbeitsdruck vorgebender Druckregler eingeschaltet ist, und mit einem Steuerventil, das in einen eingangsseitig stromauf des Druckreglers und ausgangsseitig stromab des Druckreglers mit dem Versorgungskanal in Fluidverbindung stehenden Ausblaskanal eingeschaltet ist, wobei das Steuerventil aus einer während des Messmodus eingenommenen Grundstellung in eine den Luftdurchtritt durch den Ausblaskanal freigebende Ausblasstellung schaltbar ist, um in einen Ausblasmodus zu wechseln, in dem unter Umgehung des Druckreglers durch den Ausblaskanal hindurch Druckluft in den stromab des Druckreglers befindlichen Kanalabschnitt des Versorgungskanals einspeisbar ist, um der mindestens einen Messdüse einen im Vergleich zum Messmodus erhöhten Druckluft-Volumenstrom zuzuführen.

Messvorrichtungen dieser Art, wie sie beispielsweise aus der EP-A-1393854 oder der Betriebsanleitung "Pneumatische Positionsüberwachung MS01, 18. Dezember 2003, Rexroth Bosch Group, XP002427616, bekannt sind, werden in der Regel eingesetzt, um die korrekte Auflage zu bearbeitender Werkstücke auf einer Unterlage zu überwachen. Während eines Messmodus der Messvorrichtung strömt aus einer der Unterlage zugeordneten Messdüse Druckluft aus, wobei sich abhängig vom Abstand des Werkstückes zu der Messdüse ein Staudruck aufbaut, der Rückschlüsse darauf zulässt, ob ein Gegenstand in korrekter Position und mithin in einem gewünschten Abstand zu der Messdüse positioniert ist. Während des Messmodus wird der zur jeweiligen Messdüse führende Versorgungskanal aus einer Druckluftquelle mit unter einem Versorgungsdruck stehender Druckluft gespeist, die von dem Druckregler auf einen niedrigeren Arbeitsdruck eingeregelt wird. Während eines Werkstückwechsels kann die Messdüse von Verunreinigungen befreit werden, indem sie mit erhöhter Strömungsrate von Druckluft durchströmt und ausgeblasen wird. Der Wechsel in den Ausblasmodus wird durch Betätigen eines Steuerventils hervorgerufen, das in den Verlauf eines den Eingang des Druckreglers mit der Messdüse verbindenden Ausblaskanals eingeschaltet ist. Das Steuerventil kann in eine Entlüftungsstellung umgeschaltet werden, in der es den Ausblaskanal bis hin zu einem in seinen Verlauf eingeschalteten Rückschlagventil entlüftet.

Eine in der DE 197 34 374 A1 beschriebenen Messvorrichtung enthält ein Steuerventil, durch das eine Messdüse wahlweise mit dem Ausgang eines Druckreglers oder mit einem Ausblaskanal verbindbar ist.

Bei einer in der DE 42 32 630 A1 beschriebenen Messvorrichtung ist der Ausblaskanal eingangsseitig an den Ausgang des Druckreglers angeschlossen. Zur Entfernung hartnäckiger Verunreinigungen aus der Messdüse erweist sich die Ausblasströmung daher in manchen Fällen als zu schwach.

Die DE 199 26 946 A1 beschreibt ebenfalls eine Messvorrichtung zur pneumatischen Positionskontrolle eines Werkstückes, die allerdings nicht die Möglichkeit bietet, zeitweilig in einen Ausblasmodus umzuschalten.

Es ist die Aufgabe der vorliegenden Erfindung, eine Messvorrichtung zu schaffen, die eine effektive Reinigung der angeschlossenen Messdüse(n) ermöglicht sowie einen schnellen Beginn des Messvorganges nach einem Verschluss einer Messdüse.

Zur Lösung dieser Aufgabe ist vorgesehen, dass das Steuerventil in eine die Druckentlastung des stromab des Druckreglers zwischen dem Druckregler und der mindestens einen Messdüse befindlichen Kanalabschnittes des Versorgungskanals ermöglichende Entlüftungsstellung umschaltbar ist.

Da die Ausblasluft für die mindestens eine Messdüse aus dem den Druckregler einganggseitig speisenden Kanalabschnitt des Versorgungskanals abgegriffen wird, steht sie unter einem relativ hohen Ausblasdruck. Mit diesem hohen Ausblasdruck können auch relativ starke Verunreinigungen sehr zuverlässig und in kurzer Zeit aus der zugeordneten Messdüse entfernt werden. Sollte eine Messdüse während des Ausblasmodus von einem zu kontrollierenden Gegenstand verschlossen werden, ist es von Vorteil, dass das Steuerventil in eine Entlüftungsstellung umschaltbar ist, die eine Entlüftung des stromab des Druckreglers liegenden Kanalabschnittes des Versorgungskanals ermöglicht und somit einen raschen Druckabbau auf den für die Positionskontrolle erforderlichen Arbeitsdruck.

Vorteilhafte Weiterbildungen der Erfindung gehen aus den Unteransprüchen hervor.

Es kann insbesondere vorgesehen sein, dass das Steuerventil in seiner Entlüftungsstellung den stromab des Druckreglers liegenden Kanalabschnitt des Versorgungskanals mit einem zur Atmosphäre führenden Entlüftungskanal verbindet.

Es wäre prinzipiell denkbar, das Steuerventil als Dreistellungsventil auszubilden, das wahlweise in der Ausblasstellung, in der Entlüftungsstellung oder in einer den Versorgungskanal dicht abtrennenden Grundstellung positionierbar ist. Während des Messmodus nimmt das Steuerventil hierbei zweckmäßigerweise die abgesperrte Grundstellung ein und wird je nach Bedarf wahlweise in die Ausblasstellung oder die Entlüftungsstellung umgeschaltet.

Als vorteilhafter wird eine Bauform angesehen, bei der das Steuerventil zweckmäßigerweise ein Zweistellungsventil ist und bei der die Grundstellung und die Entlüftungsstellung von ein und derselben Stellung gebildet sind. Hier ist dann aber in den Entlüftungskanal zweckmäßigerweise ein Druckbegrenzungsventil eingeschaltet, das die Verbindung zwischen der dem Druckregler nachgeordneten Sekundärseite des Versorgungskanals und der Atmosphäre automatisch unterbricht, wenn der sekundärseitige Druck auf einen gewissen Druckgrenzwert abgefallen ist. Eine besonders zuverlässige Einhaltung des gewünschten Druckgrenzwertes garantiert hierbei die Verwendung eines Differenzdruck-Regelventils als Druckbegrenzungsventil.

Der eingestellte Druckgrenzwert ist zweckmäßigerweise niedriger oder höher als der durch den Druckregler vorgebbare Arbeitsdruck. Ist er höher als der vorgegebene Arbeitsdruck, wird ein unerwünschtes Abblasen des Druckbegrenzungsventils während des unter Arbeitsdruck stattfindenden Messmodus verhindert. Um gleichwohl ein relativ schnelles Absinken des Druckes auf den Arbeitsdruck zu ermöglichen, kann ein das Druckbegrenzungsventil umgehender Drosselkanal vorhanden sein, der ständig eine minimale Druckluft-Leckage zulässt. Dies begünstigt im Übrigen auch das Regelverhalten des Druckbegrenzungsventils.

Ein im Vergleich zum vorgegebenen Arbeitsdruck niedrigerer Druckgrenzwert ermöglicht eine besonders schnelle Entlüftung und verbessert somit das Ansprechverhalten.

An den Entlüftungskanal kann, zwischen dem Steuerventil und dem Druckbegrenzungsventil, ein zusätzlicher Druckluft-Einspeisekanal angeschlossen sein. Dieser ermöglicht es, über das in seiner Entlüftungsstellung befindliche Steuerventil hinweg auch dann zum Ausblasen der Messdüsen dienende Druckluft einzuspeisen, wenn die Messvorrichtung deaktiviert bzw. stromlos ist. Beispielsweise kann dieser zusätzliche Druckluft-Einspeisekanal immer dann zum Ausblasen genutzt werden, wenn während Betriebspausen der Messvorrichtung, oder unmittelbar im Anschluß an die Deaktivierung der Messvorrichtung für noch eine gewisse Zeit, verhindert werden soll, dass die Messdüsen verschmutzen. An den Druckluft-Einspeisekanal kann beispielsweise über ein Absperrventil eine Druckluftquelle angeschlossen sein, wobei das Absperrventil während des Messmodus und des regulären Ausblasmodus eine die Druckluftquelle absperrende Absperrstellung einnimmt und nach Deaktivierung der Messvorrichtung während einer gewissen Zeitspanne eine die Druckluftquelle zuschaltende Offenstellung einnimmt.

Ist in den Entlüftungskanal kein Druckbegrenzungsventil eingeschaltet, kann alternativ auch der Entlüftungskanal selbst als Druckluft-Einspeisekanal genutzt werden.

Mittels eines stromauf des Druckreglers in den Versorgungskanal eingeschalteten Einschaltventils kann die Messvorrichtung sehr bequem ein- und ausgeschaltet werden.

Sowohl bei dem Steuerventil als auch bei dem gegebenenfalls vorhandenen Einschaltventil handelt es sich vorzugsweise um ein elektrisch betätigbares Ventil. Für Testzwecke oder auch für bewusst manuell vorzunehmende Umschaltmaßnahmen kann jedes dieser Ventile allerdings auch mit einer zusätzlichen Handbetätigungseinrichtung ausgestattet sein.

In jeden zu einer Messdüse führenden Kanalabschnitt des Versorgungskanals können Messmittel eingeschaltet sein, die ein Messsignal hervorrufen, das von der momentanen Durchflussrate der die Messdüse durchströmenden Druckluft abhängt. Diese Messmittel können beispielsweise eine Drossel oder eine Venturidüse enthalten. Von Vorteil ist es, wenn der Ausgang des Ausblaskanals zwischen den Druckregler und den Messmitteln an den Versorgungskanal angeschlossen ist, so dass der beim Ausblasen erhöhte Volumenstrom auch durch die Messmittel hindurchtritt.

Eine leichte Umrüstung auf unterschiedliche Messaufgaben ist möglich, wenn die Messvorrichtung insgesamt einen modularen Aufbau besitzt. Druckregler und Steuerventil, sowie - sofern vorhanden - zweckmäßigerweise auch das Druckbegrenzungsventil und/oder das Einschaltventil, sind hierbei in einem Steuermodul zusammengefasst, an das mindestens ein mit Messmitteln ausgestattetes Messmodul lösbar anbaubar ist. Das Messmodul besitzt einen Ausgang für den Anschluss einer Messdüse. Befindet sich der Ausblaskanal einschließlich dessen Vereinigungsstelle mit dem Versorgungskanal innerhalb des Steuermoduls, kann sich die fluidische Verkettung zwischen dem Steuermodul und den Messmodulen auf den Versorgungskanal beschränken. Dies ermöglicht eine besonders kostengünstige Herstellung der Messmodule.

Den Messmitteln sind zweckmäßigerweise Erfassungs- und/oder Auswertemittel zugeordnet, die insbesondere die sich durch den zu positionierenden Gegenstand einstellenden Messdrücke erfassen und gegebenenfalls darauf aufbauend ermitteln können, ob eine korrekte Position vorliegt oder nicht. Dabei ist eine Kommunikationsmöglichkeit mit einer externen elektronischen Steuereinrichtung von Vorteil, entweder drahtgebunden, beispielsweise über ein Kabel, oder drahtlos, beispielsweise mittels Funkübertragung. Auf die gleiche Weise können auch die Ventilbetätigungssignale übermittelt werden.

Die gesamte elektrische Signalkommunikation kann über eine einzige, gemeinsame Kommunikationsschnittstelle abgewickelt werden, die Bestandteil einer elektrischen Verkettungseinheit der Messvorrichtung ist, an die sämtliche elektrisch zu betätigenden Komponenten angeschlossen sind.

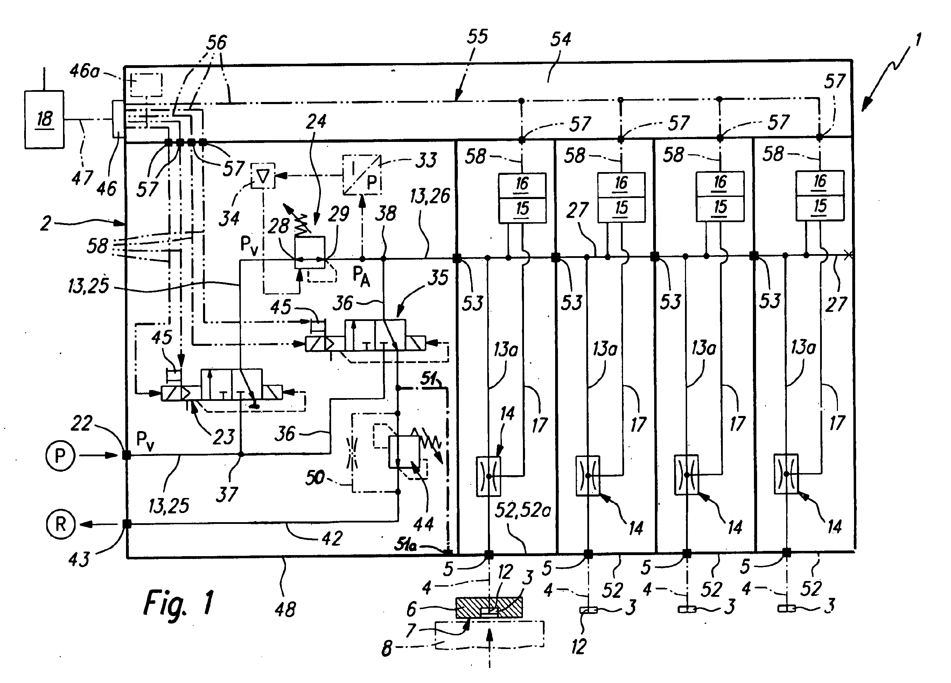

Nachfolgend wird die Erfindung anhand der beiliegenden Zeichnung näher erläutert. Die einzige Figur (Figur 1) zeigt schematisch einen bevorzugten Aufbau der erfindungsgemäßen Messvorrichtung.

Die insgesamt mit Bezugsziffer 1 bezeichnete Messvorrichtung setzt sich beim Ausführungsbeispiel aus einem Basisgerät 2 und mehreren daran angeschlossenen Messdüsen 3 zusammen. Exemplarisch sind insgesamt vier Messdüsen vorhanden, deren Anzahl allerdings prinzipiell beliebig ist. Es ist mindestens eine Messdüse 3 vorhanden.

Jede Messdüse 3 ist über eine fluidische Versorgungsleitung 4 an einen ihr spezifisch zugeordneten Ausgang 5 am Basisgerät 2 angeschlossen. Die Versorgungsleitung 4 kann flexibel und prinzipiell von beliebiger Länge sein. Man ist jedoch bestrebt, die Länge der Versorgungsleitung 4 zugunsten eines optimalen Ansprechvermögens der Messvorrichtung 1 möglichst kurz zu halten.

Jede Messdüse 3 ist im betriebsbereiten Zustand einem in der Regel als Unterlage fungierenden Anlagekörper 6 zugeordnet, der in der Zeichnung nur in Verbindung mit der links liegenden Messdüse 3, und auch hier nur schematisch, abgebildet ist. Die Messdüse 3 wird meist in den Anlagekörper 6 integriert sein. Letzterer definiert eine Anlagefläche 7 für einen zu positionierenden, in der Zeichnung strichpunktiert angedeuteten Gegenstand 8, bei dem es sich in der Regel um ein zu bearbeitendes oder zu montierendes Werkstück handelt.

Jede Messdüse 3 ist von einem Düsenkanal 12 durchsetzt, durch den im Betrieb der Messvorrichtung 1 Druckluft zur Atmosphäre ausströmt. Die Mündung des Düsenkanals 12 ist bezüglich der Anlagefläche 7 minimal zurückversetzt. Dadurch verbleibt bei an der Anlagefläche 7 anliegendem Gegenstand 8 ein minimaler Zwischenraum zwischen dem Gegenstand 8 und der Austrittsöffnung des Düsenkanals 12.

Jeder Ausgang 5 kommuniziert mit einem im Innern des Basisgerätes 2 verlaufenden gemeinsamen Versorgungskanal 13, der die durch die Messdüsen 3 hindurchströmende Druckluft liefert. Der Versorgungskanal 13 splittet sich ausgangsseitig in eine der Anzahl der Ausgänge 5 entsprechende Anzahl von Messabschnitten 13a auf, in deren Verlauf Messmittel 14 eingeschaltet sind, die ein Messsignal hervorrufen können, das von der Durchflussrate abhängt, mit der die jeweils angeschlossene Messdüse momentan von Druckluft durchströmt wird.

Zur Erfassung der Messsignale sind den verschiedenen Messmitteln 14 jeweils geeignete Erfassungsmittel 15 zugeordnet, wobei mit den Erfassungsmitteln 15 zusammenwirkende Auswertemittel 16 in der Lage sind, durch Auswertung der Erfassungsmittel 15 festzustellen, ob ein Gegenstand 8 korrekt am zugeordneten Anlagekörper 6 platziert ist.

Die Messmittel 14, Erfassungsmittel 15 und Auswertemittel 16 sind von an sich bekannter Natur. Beispielsweise können die Messmittel 14 eine Ejektoreinrichtung, insbesondere auf der Basis einer Venturidüse, enthalten, die beim Hindurchströmen der Druckluft einen Unterdruck erzeugt, der über einen Abgriffskanal 17 den Erfassungsmitteln 15 zugeleitet wird, wobei letztere mindestens einen Drucksensor enthalten. Der abgegriffene Unterdruck hängt vom Abstand zwischen dem Gegenstand 8 und der Auslassöffnung der Messdüse 3 ab, wobei die Messvorrichtung 1 hinsichtlich eines Sollwertes kalibriert ist, der dann auftritt, wenn ein Gegenstand 8 vorschriftsmäßig an der Anlagefläche 7 anliegt und dadurch ein vorbestimmter Abstand zur Austrittsöffnung der Messdüse 3 vorhanden ist.

Ändert sich der Abstand des Gegenstandes 8 zur Messdüse 3, beeinflusst dies den durch die Messdüse 3 hindurchströmenden Druckluft-Volumenstrom und somit den über den Abgriffskanal 17 abgreifbaren Druck. In den Auswertemitteln 16 wird der aktuell erfasste Druck mit dem Sollwert verglichen und dadurch eine Positionskontrolle bezüglich des zugeordneten Gegenstandes 8 durchgeführt. Es kann vorgesehen sein, dass die Auswertemittel 16 je nach Situation ein "Gut"-Signal oder ein "Schlecht"-Signal generieren, das beispielsweise visualisierbar ist, um zu erkennen zu geben, ob ein zu bearbeitender Gegenstand 8 die gewünschte Position einnimmt oder nicht. Auch eine akustische Signalgabe ist möglich.

Die optische und/oder akustische Meldung kann unmittelbar durch entsprechende Mittel des Basisgerätes 2 erfolgen, beispielsweise durch Leuchtanzeigemittel und/oder durch einen Geräuschgenerator. Es besteht ferner die zusätzliche oder alternative Möglichkeit, eine Signalübertragung von den Auswertemitteln 16 zu einer externen elektronischen Steuereinrichtung 18 vorzunehmen, damit diese das ausgewertete Ergebnis in dem vorgenannten oder in einem anderen Sinne verarbeiten kann.

Prinzipiell wäre es möglich, nur die Erfassungsmittel 15 in das Basisgerät 2 zu integrieren und die Auswertemittel 16 in die elektronische Steuereinrichtung 18 zu verlagern.

Bei einer anderen Messart, wie sie beispielsweise in der DE 42 32 630 A1 beschrieben ist, enthalten die Messmittel 14 eine Drossel und der Abgriffskanal 17 ist an den zwischen der Drossel und dem Ausgang 5 verlaufenden endseitigen Kanalabschnitt des Messabschnittes 13a angeschlossen, um den sich jeweils aufstauenden Druck abzugreifen.

Bei der Auswertung der Messergebnisse kann bei Bedarf auch noch der den Messmitteln 14 zugeführte Arbeitsdruck p_{A} der Druckluft berücksichtigt werden. Aus diesem Grund sind die Erfassungsmittel 15 beim Ausführungsbeispiel auch noch an entsprechender Stelle an den Versorgungskanal 13 angeschlossen.

Der Versorgungskanal 13 besitzt einen den Ausgängen 5 entgegengesetzten Eingang 22, an den eine Druckluftquelle P anschließbar ist, um unter einem Versorgungsdruck p_{V} stehende Druckluft einzuspeisen. In den Verlauf des Versorgungskanals 13 ist ein Druckregler 24 eingeschaltet. Dieser unterteilt den Versorgungskanal 13 in einen stromab in Richtung zu den Ausgängen 5 verlaufenden Kanalabschnitt - im Folgenden als Sekundärkanal 26 bezeichnet - sowie einen stromauf zu dem Eingang 22 führenden Kanalabschnitt - im Folgenden Primärkanal 25 genannt.

Der Sekundärkanal 26 verfügt über einen sich an den Ausgang 29 des Druckreglers 24 anschließenden Hauptabschnitt 27, von dem die diversen Messabschnitte 13a abzweigen.

In den Verlauf des Primärkanals 25 ist zweckmäßigerweise ein Einschaltventil 23 eingeschaltet. Dieses kann zwischen der aus der Zeichnung ersichtlichen Absperrstellung und einer Arbeitsstellung umgeschaltet werden. In seiner Arbeitsstellung ist der Eingang 22 des Versorgungskanals 13 mit dem Eingang 28 des Druckreglers 24 verbunden, so dass an Letzterem der Versorgungsdruck p_{V} anliegt. In der Absperrstellung ist der Eingang 28 des Druckreglers 24 von dem Eingang 22 des Versorgungskanals 13 abgetrennt und insbesondere komplett abgesperrt. Anstelle eines entsprechend verschalteten 3/2-Wegeventils wie beim Ausführungsbeispiel kann dabei als Einschaltventil 23 insbesondere auch ein einfaches Zweiwege-Absperrventil (2/2-Wegeventil) eingesetzt werden.

In der Absperrstellung des Einschaltventils 23 befindet sich die Messvorrichtung 1 im ausgeschalteten bzw. deaktivierten Zustand. Betriebsbereit ist sie in der Arbeitsstellung des Einschaltventils 23.

Der Druckregler 24 regelt den im Sekundärkanal 26 herrschenden Arbeitsdruck p_{A} auf einen voreingestellten Wert. Dieser Wert ist variabel vorgebbar. Abgebildet ist ein rein pneumatisch arbeitender Druckregler 24 an sich bekannter Bauart, bei dem der im Sekundärkanal 26 herrschende Sekundärdruck pneumatisch als Regelgröße rückgeführt ist. Alternativ wäre aber auch eine strichpunktiert angedeutete elektronische Druckreglervariante denkbar, bei der der Sekundärdruck durch einen Drucksensor 33 erfasst wird und in ein elektrisches Stellsignal umgewandelt wird, durch das ein auf den Druckregler 24 einwirkendes Stellglied 34 betätigbar ist.

Mit Hilfe des Druckreglers 24, vorzugsweise ein Präzisionsdruckregler, lässt sich der den Messmitteln 14 als Eingangsdruck zugeführte Arbeitsdruck p_{A} sehr präzise vorgeben.

Der Versorgungsdruck p_{V} liegt bei einer typischen Betriebsweise der Messvorrichtung 1 zwischen 3 und 8 bar. Der Arbeitsdruck p_{A} kann beispielsweise auf einen Wert von 1,2 bar eingestellt sein.

Das Basisgerät 2 ist des Weiteren mit einem Steuerventil 35 ausgestattet, das es ermöglicht, die Messvorrichtung 1 zwischen dem eben geschilderten Messmodus und einem Ausblasmodus umzuschalten. In dem Ausblasmodus wird den angeschlossenen Messdüsen 3 ein im Vergleich zum Messmodus erhöhter Druckluft-Volumenstrom zugeführt, um Verunreinigungen aus der Messdüse und deren unmittelbaren Umgebung durch Wegblasen zu entfernen. Dieser Betriebsmodus kann nach Bedarf gewählt werden und wird zweckmäßigerweise bei jedem Gegenstandswechsel ausgeführt. Dadurch ist gewährleistet, dass für jeden neu zu positionierenden Gegenstand 8 saubere Messverhältnisse vorhanden sind. Späne oder sonstige Verunreinigungen, die sich möglicherweise im Düsenkanal 12 der Messdüse 3 ablagern könnten und das Messergebnis verfälschen würden, lassen sich auf diese Weise wirksam und ohne mechanischen Eingriff entfernen.

Das Steuerventil 35 ist in dem Verlauf eines in dem Basisgerät 2 verlaufenden Ausblaskanals 36 eingeschaltet, der eingangsseitig - eingangsseitige Vereinigungsstelle 37 - an den Primärkanal 25 und ausgangsseitig - ausgangsseitige Vereinigungsstelle 38 - an den Sekundärkanal 26 angeschlossen ist. Die ausgangsseitige Vereinigungsstelle 38 befindet sich an dem Hauptabschnitt 27 stromauf den Abzweigstellen der einzelnen Messabschnitte 13a.

Bei dem abgebildeten bevorzugten Ausführungsbeispiel ist das Steuerventil 35 ein Zweistellungsventil. Es kann zwischen der abgebildeten Grundstellung und einer Ausblasstellung umgeschaltet werden. Um den Messmodus vorzugeben, wird das Steuerventil 35 in der Grundstellung positioniert. Der Ausblasmodus ergibt sich, indem das Steuerventil 35 in die Ausblasstellung umgeschaltet wird.

Während der Ausblaskanal 36 in der Grundstellung unterbrochen ist, so dass über ihn hinweg keine Druckluft in den Sekundärkanal 26 zuströmen kann, ermöglicht die Ausblasstellung über den Ausblaskanal 36 hinweg ein Überströmen von unter dem Versorgungsdruck p_{V} stehender Druckluft aus dem Primärkanal 25 in den Sekundärkanal 26, unter Umgehung des Druckreglers 24. Somit steigt der im Sekundärkanal 26 herrschende Druck unabhängig von der gewählten Druckreglereinstellung schlagartig an und es verstärkt sich die Druckluftströmung durch den Sekundärkanal 26, auch durch die Messmittel 14 hindurch, bis hin zu den angeschlossenen Messdüsen 3.

Zum Zurückschalten in den Messmodus ist das Steuerventil 35 lediglich in die Grundstellung zurückzuschalten. Der erhöhte Sekundärdruck baut sich dann umgehend über die Messdüsen 3 hinweg ab, bis wieder der durch den Druckregler 24 vorgegebene Arbeitsdruck p_{A} erreicht ist.

Um die geschilderte Funktionalität zu gewährleisten, würde es prinzipiell genügen, das Steuerventil 35 als einfaches Zweiwege-Absperrventil auszubilden. Allerdings ist es vorteilhaft, wenn sich mit dem Steuerventil 35 auch eine Entlüftungsstellung realisieren lässt, die es ermöglicht, den Sekundärkanal 26 über das Steuerventil 35 hinweg zur Atmosphäre R zu entlüften. Eine solche Funktionalität ist beim Ausführungsbeispiel gegeben.

Durch die Entlüftungsmöglichkeit kann ein rascher Druckabbau innerhalb des Sekundärkanals 26 insbesondere in solchen Fällen hervorgerufen werden, in denen eine Druckentlastung durch eine oder mehrere der angeschlossenen Messdüsen 3 hindurch verhindert oder eingeschränkt ist, weil ein zu positionierender Gegenstand 8 den Düsenkanal 12 aus irgendwelchen Gründen komplett verschließt. Ohne Entlüftungsfunktion des Steuerventils 35 müsste hier mit dem Beginn des eigentlichen Messvorganges abgewartet werden, bis über die Messdüsen 3 hinweg ein Druckabbau stattgefunden hat, was jedoch in der Regel eine gewisse Zeit in Anspruch nimmt. Unter Vermittlung des Steuerventils 35 kann eine wesentlich schnellere Druckentlastung über einen großen Entlüftungsquerschnitt hervorgerufen werden.

Beim Ausführungsbeispiel ist an das Steuerventil 35 ein zur Atmosphäre R führender Entlüftungskanal 42 angeschlossen. An dem Basisgerät 2 befindet sich zu diesem Zweck ein mit dem Entlüftungskanal 42 kommunizierender Entlüftungsausgang 43.

In den Verlauf des Entlüftungskanals 42 ist ein zweckmäßigerweise als Differenzdruck-Regelventil ausgebildetes Druckbegrenzungsventil 44 eingeschaltet, das auf einen bestimmten Druckgrenzwert eingestellt ist, wobei es den Fluiddurchgang durch den Entlüftungskanal 42 nur solange frei gibt, wie der eingangsseitig an ihm anstehende Druck höher ist als dieser Druckgrenzwert.

Ist das Steuerventil 35 in die als Figur 1 ersichtliche Entlüftungsstellung geschaltet, verbindet es den Sekundärkanal 26 mit dem Druckbegrenzungsventil 44. Dadurch kann sich der Druck im Sekundärkanal 26 über den Entlüftungskanal 42 hinweg auf den vorgegebenen Druckgrenzwert abbauen.

Wird der Druckgrenzwert etwas höher gewählt als der vom Druckregler 24 vorgegebene Arbeitsdruck p_{A}, kann erreicht werden, dass das Druckbegrenzungsventil 44 schließt, bevor der Sekundärdruck auf den Arbeitsdruck p_{A} gefallen ist. Dies hat zur Folge, dass das Druckbegrenzungsventil 44 und mithin der Entlüftungskanal im normalen Messmodus der Messvorrichtung 1, wenn sich der im Sekundärkanal 26 herrschende Druck auf der Höhe des Arbeitsdruckes p_{A} bewegt, geschlossen ist. Dies ermöglicht es, das Steuerventil 35 so auszuführen, dass seine Grundstellung der Entlüftungsstellung entspricht. Trotz der Entlüftungsstellung kann sich hier der Arbeitsdruck p_{A} ungehindert aufbauen.

Empfehlenswert ist es, einen das Druckbegrenzungsventil 44 umgehenden, in der Zeichnung strichpunktiert angedeuteten Drosselkanal 50 vorzusehen, der eine ständige minimale Luftabströmung aus dem Sekundärkanal 26 ermöglicht, wenn sich das Steuerventil 35 in der Entlüftungsstellung befindet. Dadurch kann im Sekundärkanal 26 ein ungehinderter Druckabbau bis zum Arbeitsdruck p_{A} stattfinden, obwohl der eingestellte Druckgrenzwert etwas höher ist als der gewünschte Arbeitsdruck p_{A}. Vorzugsweise liegt der Druckgrenzwert 30% bis 70% über dem Arbeitsdruck p_{A}, in Verbindung mit einem Arbeitsdruck p_{A} von 1,2 bar vorzugsweise im Bereich zwischen 1,6 bar und 2 bar.

Ist eine besonders schnelle Entlüftung gewünscht, d.h. ein schnelles Ansprechverhalten, kann der Druckgrenzwert auch auf einen Wert eingestellt werden, der etwas unter dem Arbeitsdruck p_{A} liegt.

Als alternative Ausgestaltung des Steuerventils 35 käme ein Dreistellungsventil infrage, wobei in den angeschlossenen Entlüftungskanal 42 dann kein Druckbegrenzungsventil 44 eingeschaltet werden müsste. In diesem Fall wäre der Sekundärkanal 26 in der Ausblasstellung an den Ausblaskanal 36 und in der Entlüftungsstellung an den durchgängig offenen Entlüftungskanal 42 angeschlossen. Die Grundstellung wäre eine dritte Stellung, in der der Sekundärkanal 26 sowohl vom Ausblaskanal 36 als auch vom Entlüftungskanal 42 abgesperrt wäre. Hier bedürfte es dann aber zur Entlüftung des Sekundärkanals 26 eines aktiven Umschaltens des Steuerventils 35 in die Entlüftungsstellung, während beim Ausführungsbeispiel eine automatische Entlüftung stets dann stattfindet, wenn der Druck im Sekundärkanal 26 über den am Druckbegrenzungsventil 44 eingestellten Druckgrenzwert ansteigt.

An den Entlüftungskanal 42 kann, wie dies in der Zeichnung strichpunktiert angedeutet ist, zwischen dem Steuerventil 35 und dem Druckbegrenzungsventil 44 ein zusätzlicher Druckluft-Einspeisekanal 51 angeschlossen sein, der genutzt werden kann, um die Messdüsen 3 durch das in seiner Entlüftungsstellung befindliche Steuerventil 35 hindurch mit Druckluft auszublasen, wenn die Messvorrichtung 1 ausgeschaltet bzw. stromlos ist.

Exemplarisch mündet der zusätzliche Druckluft-Einspeisekanal 51 zu einem Einspeiseanschluss 51a, an den unter Zwischenschaltung eines nicht näher gezeigten Absperrventils eine ebenfalls nicht weiter abgebildete Druckluftquelle angeschlossen sein kann. Während des Messmodus und des regulären Ausblasmodus der Messvorrichtung 1 nimmt das Absperrventil eine die Druckluftquelle absperrende Absperrstellung ein. Nach dem Abschalten der Messvorrichtung 1, wenn das Einschaltventil 23 die Schließstellung einnimmt, kann das Absperrventil in eine Offenstellung umgeschaltet werden, sodass dann Druckluft über den Druckluft-Einspeisekanal 51 und das Steuerventil 35 in den Sekundärkanal 26 zuströmt und ein Ausblasen der daran angeschlossenen Messdüsen 3 bewirkt.

Beispielsweise kann der zusätzliche Druckluft-Einspeisekanal 51 immer dann zum Ausblasen genutzt werden, wenn während Betriebspausen der Messvorrichtung, oder unmittelbar im Anschluß an die Deaktivierung der Messvorrichtung für noch eine gewisse Zeit, verhindert werden soll, dass die Messdüsen 3 verschmutzen.

Soll der zusätzliche Druckluft-Einspeisekanal 51 nicht genutzt werden, wird sein Einspeiseanschluss 51a einfach mittels eines Stopfens oder dergleichen verschlossen.

Ist in den Entlüftungskanal kein Druckbegrenzungsventil 44 eingeschaltet, kann alternativ auch der Entlüftungskanal 42 selbst als Druckluft-Einspeisekanal genutzt werden. In diesem Fall wird an den Entlüftungsausgang 43 zweckmäßigerweise ein Umschaltventil angeschlossen, das es ermöglicht, den Entlüftungskanal 42 wahlweise mit der Atmosphäre oder einer Druckluftquelle zu verbinden.

Sowohl das Steuerventil 35 als auch das optional vorhandene Einschaltventil 23 sind zweckmäßigerweise elektrisch betätigbar ausgebildet. Es handelt sich insbesondere um vorgesteuerte Ventile. Beim Ausführungsbeispiel ist auf monostabile Ventile zurückgegriffen, die durch eine interne Federeinrichtung, insbesondere eine Luftfedereinrichtung, im Falle des Steuerventils 35 in die Grundstellung und im Falle des Einschaltventils 23 in die Entlüftungsstellung vorgespannt sind.

Über eine an dem Basisgerät 2 vorgesehene Kommunikationsschnittstelle 46 sind die elektrisch betätigbaren Ventile 35, 23 an die schon erwähnte elektronische Steuereinrichtung 18 anschließbar, um die erforderlichen Betätigungssignale zu erhalten.

Vorzugsweise sind die beiden Ventile 35, 23 jeweils mit einer individuellen Handbetätigungseinrichtung 45 ausgestattet, die eine manuelle Betätigung auch ohne elektrische Steuersignale ermöglicht. Dies ermöglicht einen einfachen Testbetrieb und erleichtert die Einrichtung der Messvorrichtung.

Es ist eine Ausgestaltung möglich, bei der den beiden Ventilen 35, 23 elektrische Sperrsignale von der elektronischen Steuereinrichtung 18 übermittelt werden, die eine unerwünschte Aktivierung der Handbetätigungseinrichtung 45 verhindern.

Über die Kommunikationsschnittstelle 46 findet zweckmäßigerweise auch der Signalaustausch zwischen den Auswertemitteln 16 und der externen elektronischen Steuereinrichtung 18 statt. Somit kann die elektrische Kommunikation der Messvorrichtung 1 mit der externen elektronischen Steuereinrichtung 18 über eine einzige Kommunikationsschnittstelle 46 abgewickelt werden.

Exemplarisch ist die Kommunikationsschnittstelle 46 für drahtgebundene Signalübertragung ausgestattet. Die Steuereinrichtung 18 kann über ein elektrisches Verbindungskabel 47 angeschlossen werden. Eine strichpunktiert angedeutete weitere Kommunikationsschnittstelle 46a, die zusätzlich oder alternativ vorhanden sein kann, erlaubt einen drahtlosen Signalaustausch, insbesondere durch Funkübertragung.

Die Messvorrichtung 1 verfügt zweckmäßigerweise über einen modularen Aufbau, wobei sich die Modularität vor allem auf das Basisgerät 2 bezieht. In einem Steuermodul 42 des Basisgerätes 2 sind das Steuerventil 35, das gegebenenfalls vorhandene Einschaltventil 23, der Druckregler 24 und das gegebenenfalls vorhandene Druckbegrenzungsventil 44 zu einer Baugruppe zusammengefasst, einschließlich der zugehörigen Kanäle. Der Eingang 22 für den Versorgungskanal 13 wie auch der Entlüftungsausgang 43 befinden sich an diesem Steuermodul 48.

An das Steuermodul 48 sind mehrere Messmodule 52 angebaut. Jedes Messmodul 52 besitzt einen der Ausgänge 5, den zu diesem Ausgang 5 führenden Messabschnitt 13a, die dem Messabschnitt 13a zugeordneten Messmittel 14 und die zugeordneten Erfassungsmittel 15 und gegebenenfalls Auswertemittel 16.

Die Messmodule 52 sind in einer Reihe aufeinanderfolgend aneinander angebaut, wobei eines der beiden abschließenden Messmodule 52a an das Steuermodul 48 angebaut ist. Entsprechend der Anzahl der angebauten Messmodule 52 kann die Messvorrichtung 1 mithin eine entsprechende Anzahl von Messdüsen 3 betreiben. Der Anwender hat die Möglichkeit, die Messvorrichtung 1 beliebig zu erweitern oder in ihrer Ausstattung zu reduzieren.

Die fluidische Verkettung zwischen Steuermodul 48 und Messmodulen 52 erfolgt über den Hauptabschnitt 27 des Sekundärkanals 26. Dieser verläuft ausgehend vom Ausgang 29 des Druckreglers 24 durch das Steuermodul 48 und durch sämtliche Messmodule 52 hindurch, wobei er sich aus einzelnen Kanalabschnitten zusammensetzt, die in den diversen Modulen 48, 52 verlaufen und die an fluidischen Schnittstellen 53 miteinander kommunizieren, so dass sich ein durchgehender Hauptabschnitt 27 ergibt.

In entsprechender Weise wie diese fluidische Längsverkettung ließe sich auch eine elektrische Verkettung zwischen den einzelnen Modulen 48, 52 realisieren, um die diversen elektrischen Signale von und zu den einzelnen Komponenten zu übertragen. Beim Ausführungsbeispiel ist allerdings ein anderer Weg der elektrischen Verkettung gewählt. An die aus Steuermodul 48 und Messmodulen 52 bestehende Modulanordnung ist längsseits ein sich in der Aufreihungsrichtung der Module 48, 52 erstreckendes elektrisches Verkettungsmodul 54 angebaut, in das eine elektrische Verkettungseinrichtung 55 integriert ist. Das Verkettungsmodul 54 trägt die Kommunikationsschnittstelle 46, 46a, von der die elektrische Verkettungseinrichtung 55 bildende elektrische Leiter 56 ausgehen, die über elektrische Schnittstellen 57 am Fügebereich zu der Modulanordnung 42, 52 mit weiteren elektrischen Leitern 58 verbunden sind, die mit der elektrischen Ausstattung des Steuermoduls 48 und der Messmodule 52 verbunden sind.

In Verbindung mit dem modularen Aufbau des Basisgerätes 2 ist es von Vorteil, wenn sich die ausgangsseitige Vereinigungsstelle 38 zwischen Ausblaskanal 36 und Sekundärkanal 26 innerhalb des Steuermoduls 48 befindet. Dadurch erübrigt sich eine Hindurchführung des Ausblaskanals 36 durch die Messmodule 52.

## Patentansprüche

1. Messvorrichtung zur pneumatischen Positionskontrolle von Gegenständen, mit einem mit mindestens einer Messdüse (3) verbundenen oder verbindbaren Versorgungskanal (13), in den ein während eines Messmodus einen Arbeitsdruck vorgebender Druckregler (24) eingeschaltet ist, und mit einem Steuerventil (35), das in einen eingangsseitig stromauf des Druckreglers (24) und ausgangsseitig stromab des Druckreglers (24) mit dem Versorgungskanal (13) in Fluidverbindung stehenden Ausblaskanal (36) eingeschaltet ist, wobei das Steuerventil (35) aus einer während des Messmodus eingenommenen Grundstellung in eine den Luftdurchtritt durch den Ausblaskanal (36) freigebende Ausblasstellung schaltbar ist, um in einen Ausblasmodus zu wechseln, in dem unter Umgehung des Druckreglers (24) durch den Ausblaskanal (36) hindurch Druckluft in den stromab des Druckreglers (24) befindlichen Kanalabschnitt (26) des Versorgungskanals (13) einspeisbar ist, um der mindestens einen Messdüse (3) einen im Vergleich zum Messmodus erhöhten Druckluft-Volumenstrom zuzuführen, **dadurch gekennzeichnet, dass** das Steuerventil (35) in eine die Druckentlastung des stromab des Druckreglers (24) zwischen dem Druckregler (24) und der mindestens einen Messdüse (3) befindlichen Kanalabschnittes (26) des Versorgungskanals (13) ermöglichende Entlüftungsstellung umschaltbar ist.

2. Messvorrichtung nach Anspruch 1, **dadurch gekennzeichnet, dass** das Steuerventil (35) in seiner Entlüftungsstellung den stromab des Druckreglers (24) befindlichen Kanalabschnitt (26) des Versorgungskanals (13) mit einem zur Atmosphäre führenden Entlüftungskanal (42) verbindet.

3. Messvorrichtung nach Anspruch 2, **dadurch gekennzeichnet, dass** in den Entlüftungskanal (42) ein Druckbegrenzungsventil (44) eingeschaltet ist, das den Fluiddurchgang durch den Entlüftungskanal (42) nur solange freigibt, wie der in dem stromab des Druckreglers (24) befindlichen Kanalabschnitt (26) des Versorgungskanals (13) herrschende Druck über einem vorgegebenen Druckgrenzwert liegt.

4. Messvorrichtung nach Anspruch 3, **dadurch gekennzeichnet, dass** der Druckgrenzwert niedriger oder höher ist als der durch den Druckregler (24) vorgegebene Arbeitsdruck.

5. Messvorrichtung nach Anspruch 3 oder 4, **dadurch gekennzeichnet, dass** ein das Druckbegrenzungsventil (44) umgehender Drosselkanal (50) vorhanden ist.

6. Messvorrichtung nach einem der Ansprüche 3 bis 5, **dadurch gekennzeichnet, dass** das Druckbegrenzungsventil (44) als Differenzdruck-Regelventil ausgebildet ist.

7. Messvorrichtung nach einem der Ansprüche 3 bis 6, **dadurch gekennzeichnet, dass** an den Entlüftungskanal (42), zwischen dem Steuerventil (35) und dem Druckbegrenzungsventil (44), ein Druckluft-Einspeisekanal (51) angeschlossen ist, der bei in Entlüftungsstellung befindlichem Steuerventil (35) ein zu Ausblaszwecken dienendes Eispeisen von Druckluft ermöglicht.

8. Messvorrichtung nach einem der Ansprüche 1 bis 7, **dadurch gekennzeichnet, dass** das Steuerventil (35) ein Zweistellungsventil ist, wobei die Entlüftungsstellung der Grundstellung entspricht.

9. Messvorrichtung nach einem der Ansprüche 1 bis 8, **dadurch gekennzeichnet, dass** in dem stromauf des Druckreglers (24) befindlichen Kanalabschnitt (25) des Versorgungskanals (13) ein Einschaltventil (23) angeordnet ist, mit dem der Eingang (28) des Druckreglers (24) alternativ entweder an einen Versorgungsdruck legbar oder von dem Versorgungsdruck abtrennbar ist.

10. Messvorrichtung nach Anspruch 9, **dadurch gekennzeichnet, dass** der Eingang (28) des Druckreglers (24) im durch das Einschaltventil (23) von dem Versorgungsdruck abgetrennten Zustand komplett abgesperrt ist.

11. Messvorrichtung nach Anspruch 9 oder 10, **dadurch gekennzeichnet, dass** das Einschaltventil (23) ein elektrisch betätigbares Ventil ist, das zweckmäßigerweise mit einer zusätzlichen Handbetätigungseinrichtung (45) ausgestattet ist.

12. Messvorrichtung nach einem der Ansprüche 1 bis 11, **dadurch gekennzeichnet, dass** das Steuerventil (35) ein elektrisch betätigbares Ventil ist, das zweckmäßigerweise mit einer zusätzlichen Handbetätigungseinrichtung (45) ausgestattet ist.

13. Messvorrichtung nach einem der Ansprüche 1 bis 12, **dadurch gekennzeichnet, dass** in den zu der mindestens einen Messdüse (3) führenden Kanalabschnitt (13a) des Versorgungskanals (13) Messmittel (14) eingeschaltet sind, die ein von der momentanen Durchflussrate durch die zugeordnete Messdüse (3) abhängiges Messsignal hervorrufen.

14. Messvorrichtung nach Anspruch 13, **dadurch gekennzeichnet, dass** der Ausgang des Ausblaskanals (36) zwischen dem Druckregler (24) und den Messmitteln (14) an den Versorgungskanal (13) angeschlossen ist.

15. Messvorrichtung nach Anspruch 13 oder 14, **gekennzeichnet durch** einen modularen Aufbau, wobei der Druckregler (24) und das Steuerventil (35) Bestandteile eines Steuermoduls (48) sind, an das mindestens ein Messmodul (52) angebaut oder anbaubar ist, das einen zu einer Messdüse (3) führenden Ausgang (5) und die dieser Messdüse (3) zugeordneten Messmittel (14) aufweist, wobei der Ausblaskanal (36) einschließlich dessen Vereinigungsstelle (38) mit dem Versorgungskanal (13) in dem Steuermodul angeordnet sind.

16. Messvorrichtung nach Anspruch 15, **dadurch gekennzeichnet, dass**, sofern vorhanden, auch das Druckbegrenzungsventil (44) und das Einschaltventil (23) Bestandteile des Steuermoduls (48) sind.

17. Messvorrichtung nach Anspruch 15 oder 16, **dadurch gekennzeichnet, dass** eine Reihe von aneinandergesetzten Messmodulen (52) an das Steuermodul (48) angebaut ist, die jeweils einen zu einer Messdüse (3) führenden Ausgang (5) und zugeordnete Messmittel (14) enthalten.

18. Messvorrichtung nach einem der Ansprüche 13 bis 17, **dadurch gekennzeichnet, dass** den Messmitteln (14) Erfassungsmittel (15) und/oder Auswertemittel (16) zugeordnet sind, die über mindestens eine Kommunikationsschnittstelle (46) mit einer externen elektronischen Steuereinrichtung (18) kommunizieren können.

19. Messvorrichtung nach Anspruch 18, **dadurch gekennzeichnet, dass** die mindestens eine Kommunikationsschnittstelle (46) für drahtgebundene und/oder für drahtlose Signalübertragung ausgelegt ist.

20. Messvorrichtung nach Anspruch 18 oder 19, **dadurch gekennzeichnet, dass** wenigstens ein Ventil (35, 23) elektrisch betätigbar ausgebildet und ebenfalls an die mindestens eine Kommunikationsschnittstelle (46) angeschlossen ist.

21. Messvorrichtung nach einem der Ansprüche 18 bis 20, **dadurch gekennzeichnet, dass** eine elektrische Verkettungseinrichtung (55) vorhanden ist, über die die elektrisch betätigbaren Komponenten (35, 23, 16) der Messvorrichtung (1) mit einer gemeinsamen Kommunikationsschnittstelle (46) verbunden sind.

22. Messvorrichtung nach Anspruch 21, **dadurch gekennzeichnet, dass** die elektrische Verkettungseinrichtung (55) in einem eigenständigen Verkettungsmodul (54) untergebracht ist.

## Claims

1. Measuring device for the pneumatic position checking of objects, with a supply passage (13) connected or connectable to at least one measuring nozzle (3) and incorporating a pressure regulator (24) presetting an operating pressure in a measuring mode, and with a control valve (35) installed into a blow-off passage (36) in fluid connection with the supply passage (13) upstream of the pressure regulator (24) on the inlet side and downstream of the pressure regulator (24) on the outlet side, wherein the control valve (35) can be switched from a basic position adopted in the measuring mode to a blow-off position enabling the flow of air through the blow-off passage (36) in order to change over to a blow-off mode in which, bypassing the pressure controller (24), compressed air can be fed through the blow-off passage (36) into the passage section (26) of the supply passage (13) which is downstream of the pressure regulator (24) in order to supply the at least one measuring nozzle (3) with a compressed air flow which is increased relative to the measuring mode, **characterised in that** the control valve (35) can be switched to a venting position allowing the pressure relief of the passage section (26) of the supply passage (13) which is located downstream of the pressure regulator (24) between the pressure regulator (24) and the at least one measuring nozzle (3).

2. Measuring device according to claim 1, **characterised in that** the control valve (35) connects the passage section (26) of the supply passage (13) which is downstream of the pressure regulator (24) to a vent passage (42) leading to the atmosphere in its venting position.

3. Measuring device according to claim 2, **characterised in that** the vent passage (42) incorporates a relief valve (44) which only enables the passage of fluid through the vent passage (42) while the pressure in the passage section (26) of the supply passage (13) which is downstream of the pressure regulator (24) exceeds a preset limit pressure.

4. Measuring device according to claim 3, **characterised in that** the limit pressure is lower or higher than the operating pressure set by the pressure regulator (24).

5. Measuring device according to claim 3 or 4, **characterised in that** a restrictor passage (50) bypassing the relief valve (44) is provided.

6. Measuring device according to any of claims 3 to 5, **characterised in that** the relief valve (44) is designed as a differential pressure control valve.

7. Measuring device according to any of claims 3 to 6, **characterised in that** a compressed air feed passage (51) which enables a feed-in of compressed air for blow-off purposes in the venting position of the control valve (35) is connected to the vent passage (42) between the control valve (35) and the relief valve (44).

8. Measuring device according to any of claims 1 to 7, **characterised in that** the control valve (35) is a two-position valve, the vent position being the basic position.

9. Measuring device according to any of claims 1 to 8, **characterised in that** an on-off valve (23) by means of which the inlet (28) of the pressure regulator (24) can alternatively be connected to or disconnected from the supply pressure is provided in the passage section (25) of the supply passage (13) which is located upstream of the pressure regulator (24).

10. Measuring device according to claim 9, **characterised in that** the inlet (28) of the pressure regulator (24) is completely blocked when disconnected from the supply pressure by the on-off valve (23).

11. Measuring device according to claim 9 or 10, **characterised in that** the on-off valve (23) is an electrically operated valve expediently fitted with an additional manual actuation device (45).

12. Measuring device according to any of claims 1 to 11, **characterised in that** the control valve (35) is an electrically operated valve expediently fitted with an additional manual actuation device (45).

13. Measuring device according to any of claims 1 to 12, **characterised in that** measuring means (14) generating a measuring signal depending on the current flow rate through the associated measuring nozzle (3) are provided in the passage section (13a) of the supply passage (13) which leads to the at least one measuring nozzle (3).

14. Measuring device according to claim 13, **characterised in that** the outlet of the bow-off passage (36) is connected to the supply passage (13) between the pressure regulator (24) and the measuring means (14).

15. Measuring device according to claim 13 or 14, **characterised by** a modular structure, wherein the pressure regulator (24) and the control valve (35) are components of a control module (48) to which is or can be fitted at least one measuring module (52) having an outlet (5) leading to a measuring nozzle (3) and to the measuring means (14) assigned to said measuring nozzle (3), the bow-off passage (36) including its connecting point (38) to the supply passage (13) being located in the control module.

16. Measuring device according to claim 15, **characterised in that** the relief valve (44) and the on-off valve (23), if fitted, are also components of the control module (48).

17. Measuring device according to claim 15 or 16, **characterised in that** a row of lined-up measuring modules (52) is attached to the control module (48), each of which comprises an outlet (5) leading to a measuring nozzle (3) and associated measuring means (14).

18. Measuring device according to any of claims 13 to 17, **characterised in that** detection means (15) and/or evaluation means (16) capable of communicating with an external electronic control unit (18) via at least one communication interface (46) are assigned to the measuring means (14).

19. Measuring device according to claim 18, **characterised in that** the at least one communication interface (46) is designed for wire and/or wireless signal transmission.

20. Measuring device according to claim 18 or 19, **characterised in that** at least one valve (35, 23) is electrically operated and likewise connected to the at least one communication interface (46).

21. Measuring device according to any of claims 18 to 22, **characterised in that** an electric interconnection device (55) is provided for connecting the electrically operated components (35, 23, 16) of the measuring device (1) to a common communication interface (46).

22. Measuring device according to claim 21, **characterised in that** the electric interconnection device (55) is housed in an independent interconnection module (54).

## Revendications

1. Dispositif de mesure pour le contrôle pneumatique de la position des pièces, avec un canal d'alimentation (13) relié ou pouvant être relié à au moins une tuyère de mesure (3), dans lequel est connecté un régulateur de pression (24) transmettant en mode mesure une pression de service, et avec une soupape de commande (35) qui est connectée dans un canal de sortie (36) se trouvant en liaison fluidique avec le canal d'alimentation (13) côté entrée en amont du régulateur de pression (24) et côté sortie en aval du régulateur de pression (24), la soupape de commande (35) pouvant être commutée à partir d'une position de base occupée en mode de mesure dans une position de soufflage libérant le passage de l'air à travers le canal de sortie (36), pour passer dans un mode de soufflage, dans lequel en contournant le régulateur de pression (24) à travers le canal de purge (36) de l'air comprimé peut être fourni dans le segment de canal (26) du canal d'alimentation (13) se trouvant en aval du régulateur de pression (24), pour conduire un débit volumétrique d'air comprimé augmenté par rapport au mode mesure au moins vers une tuyère de mesure (3), **caractérisé en ce que** la soupape de commande (35) peut être commutée dans une position de purge d'air permettant la décompression du segment de canal (26) du canal d'alimentation (13) placé en aval du régulateur de pression (24) entre le régulateur de pression (24) et au moins une tuyère de mesure (3) du segment de canal (26).

2. Dispositif de mesure selon la revendication 1, **caractérisé en ce que** la soupape de commande (35) dans sa position de purge d'air relie le segment de canal (26) du canal d'alimentation (13) placé en aval du régulateur de pression (24) à un canal de purge (42) conduisant à l'atmosphère.

3. Dispositif de mesure selon la revendication 2, **caractérisé en ce que** dans le canal de purge (42) est connectée une soupape de limitation de pression (44), qui libère le passage du fluide à travers le canal de purge (42) seulement tant que la pression signant dans le segment de canal (26) du canal d'alimentation (13) placé en aval du régulateur de pression (24) se trouve au dessus d'une valeur limite de pression prédéfinie.

4. Dispositif de mesure selon la revendication 3, **caractérisé en ce que** la valeur de pression limite est inférieure ou supérieure à la pression de service prédéfinie par le régulateur de pression (24).

5. Dispositif de mesure selon la revendication 3 ou 4, **caractérisé en ce qu'**il existe un canal d'étranglement (50) entourant une soupape de limitation de pression (44).

6. Dispositif de mesure selon l'une quelconque des revendications 3 à 5, **caractérisé en ce que** la soupape de limitation de pression (44) est réalisée comme une soupape de réglage de pression différentielle.

7. Dispositif de mesure selon l'une quelconque des revendications 3 à 6, **caractérisé en ce qu'**entre la soupape de commande (35) et la soupape de limitation d'air (44) est raccordé au canal de purge d'air (42) un canal d'alimentation d'air comprimé (51), qui rend possible avec une soupape de commande (35) placée en position de purge d'air une alimentation en air comprimé servant à purger.

8. Dispositif de mesure selon l'une quelconque des revendications 1 à 7, **caractérisé en ce que** la soupape de commande (35) est une soupape à deux positions, sachant que la position de purge d'air correspond à la position de base.

9. Dispositif de mesure selon l'une quelconque des revendications 1 à 8, **caractérisé en ce que** dans le segment de canal (25) du canal d'alimentation (13) placé en amont du régulateur de pression (24) est disposée une soupape de connexion (23), avec laquelle l'entrée (28) du régulateur de pression (24) peut être alternativement soit placée sur une pression d'alimentation soit séparée de la pression d'alimentation.

10. Dispositif de mesure selon la revendication 9, **caractérisée en ce que** l'entrée (28) du régulateur de pression (24) est complètement fermée dans l'état séparé de la pression d'alimentation par la soupape de connexion (23).

11. Dispositif de mesure selon la revendication 9 ou 10, **caractérisé en ce que** la soupape de connexion (23) est une soupape pouvant être actionnée de manière électrique, équipée de manière appropriée avec un dispositif d'actionnement manuel supplémentaire (45).

12. Dispositif de mesure selon l'une quelconque des revendications 1 à 11, **caractérisé en ce que** la soupape de commande (35) est une soupape pouvant être actionnée de manière électrique, équipée de manière appropriée avec un dispositif d'actionnement manuel supplémentaire (45).

13. Dispositif de mesure selon l'une quelconque des revendications 1 à 12, **caractérisé en ce que** dans le segment de canal (13a) du canal d'alimentation (13) conduisant au moins à une tuyère de mesure (3), des dispositifs de mesure sont connectés qui provoquent un signal de mesure dépendant des taux de débit instantanés à travers la tuyère de mesure (3) associée.

14. Dispositif de mesure selon la revendication 13, **caractérisé en ce que** la sortie du canal de sortie (36) est raccordé au canal d'alimentation (13) entre le régulateur de pression (24) et les dispositifs de mesure (14).

15. Dispositif de mesure selon les revendications 13 ou 14, **caractérisé par** une structure modulaire, sachant que le régulateur de pression (24) et la soupape de commande (35) sont des composants d'un module de commande (48), auquel est monté ou peut être monté au moins un module de mesure (52), qui présente une sortie (5) menant à une tuyère de mesure (3) et les dispositifs de mesure (14) associés à cette tuyère de mesure (3), le canal de sortie (36) et ses postes de nettoyage (38) étant disposés avec le canal d'alimentation (13) dans ce module de commande.

16. Dispositif de mesure selon la revendication 15, **caractérisé en ce que,** le cas échéant, la soupape de limitation de pression (44) et la soupape de connexion (23) sont des composants du module de commande (48).

17. Dispositif de mesure selon la revendication 15 ou 16, **caractérisé en ce qu'**une série de modules de mesure (52) placés les uns à côté des autres est montée sur le module de commande (48) lesquels modules de mesure contiennent respectivement une sortie (5) menant à une tuyère de mesure (3) et des dispositifs de mesure (14) associés.

18. Dispositif de mesure selon l'une quelconque des revendications 13 à 17, **caractérisé en ce qu'**aux dispositifs de mesure (14) sont associés des dispositifs de détection (15) et/ou des dispositif d'analyse (16), qui peuvent communiquer par le biais d'au moins une interface de communication (46) avec un dispositif de commande électronique externe (18).

19. Dispositif de commande selon la revendication 18, **caractérisé en ce qu'**au moins une interface de communication (46) est dimensionnée pour une transmission de signaux avec et/ou sans fil.

20. Dispositif de mesure selon la revendication 18 ou 19, **caractérisé en ce qu'**au moins une soupape (35, 23) est réalisée de manière à pouvoir être actionnée de manière électrique et également raccordée à l'interface de communication (46) au moins au nombre de une.

21. Dispositif de mesure selon l'une quelconque des revendications 18 à 20, **caractérisé en ce qu'**est présent un dispositif de maillage électrique (55), qui permet de relier les composants du dispositif de mesure (1) pouvant être actionnés de manière électrique (35, 23, 16) à une interface de communication commune (46).

22. Dispositif de mesure selon revendication 21, **caractérisé en ce que** le dispositif de maillage électrique (55) est logé dans un module de maillage (54) autonome.
